# FASCICULE DE BREVET EUROPEEN

(11) **EP 3 900 306 B1**
(45) Date de publication et mention de la délivrance du brevet: **01.10.2025**
(21) Numéro de dépôt: 19839393.6
(22) Date de dépôt: 11.12.2019
(51) Int. Cl.: H04L 61/4511, H04L 67/563

(54) **PROCÉDÉ DE DÉTERMINATION D'UNE CHAÎNE DE DÉLÉGATION ASSOCIÉE À UNE RÉSOLUTION D'UN NOM DE DOMAINE DANS UN RÉSEAU DE COMMUNICATION**
VERFAHREN ZUR BESTIMMUNG EINER DELEGATIONSKETTE IM ZUSAMMENHANG MIT DER AUFLÖSUNG EINER DOMÄNENNAMENKENNUNG IN EINEM KOMMUNIKATIONSNETZWERK
METHOD FOR DETERMINING A DELEGATION CHAIN ASSOCIATED WITH A DOMAIN NAME RESOLUTION IN A COMMUNICATION NETWORK

(30) Priorité: 19.12.2018 FR 1873372
(43) Date de publication de la demande: 27.10.2021
(73) Titulaire: Orange, 92130 Issy-les-Moulineaux (FR)
(72) Inventeur: FIEAU, Frédéric, 92326 CHÂTILLON CEDEX (FR); POLO GARCIA, Jesús Alberto, 92326 CHÂTILLON CEDEX (FR)
(86) Numéro de dépôt international: PCT/FR2019/053028
(87) Numéro de publication internationale: WO 2020/128239

(56) Documents cités:
- WO-A1-2018/115647
- US-A1- 2014 108 672
- US-A1- 2017 295 132
- US-B1- 8 909 736
- US-B2- 9 871 722
- SHEFFER INTUIT D LOPEZ O GONZALEZ DE DIOS TELEFONICA I+D T FOSSATI NOKIA Y: "Use of Short-Term, Automatically-Renewed (STAR) Certificates to Delegate Authority over Web Sites; draft-sheffer-acme-star-01.txt", USE OF SHORT-TERM, AUTOMATICALLY-RENEWED (STAR) CERTIFICATES TO DELEGATE AUTHORITY OVER WEB SITES; DRAFT-SHEFFER-ACME-STAR-01.TXT, INTERNET ENGINEERING TASK FORCE, IETF; STANDARDWORKINGDRAFT, INTERNET SOCIETY (ISOC) 4, RUE DES FALAISES CH- 1205 GENEV, 24 April 2017 (2017-04-24), pages 1 - 15, XP015119310
- SHEFFER INTUIT D LOPEZ A PASTOR PERALES TELEFONICA I+D T FOSSATI NOKIA Y: "An ACME Profile for Generating Delegated STAR Certificates; draft-ietf-acme-star-delegation-00.txt", 13 December 2018 (2018-12-13), pages 1 - 13, XP015130255, Retrieved from the Internet <URL:https://tools.ietf.org/html/draft-ietf-acme-star-delegation-00> [retrieved on 20181213]

## Description

### 1. Domaine technique

L'invention se situe dans les réseaux de communications et vise à mettre en œuvre un procédé permettant de mettre en œuvre une délégation sécurisée d'un deuxième domaine d'une architecture DNS (Domain Name Server) à un premier domaine dans le but qu'un terminal obtienne un identifiant d'un serveur de données du premier domaine apte à délivrer un contenu, l'identifiant étant initialement requis auprès du deuxième domaine.

### 2. Etat de la technique

Dans les architectures de communication, les contenus sont le plus souvent distribués aux terminaux à partir de serveurs de données qui ne sont pas nécessairement les serveurs dits d'origine qui disposent initialement des contenus demandés. Par exemple, si un terminal veut accéder aux données de la page http://www.exemple.fr, alors ces données seront probablement transmises par un serveur CDN ou autrement dit d'un serveur cache ayant obtenu les données du serveur d'origine, hébergeant les données de la page citée ci-dessus. Il convient alors de transmettre l'identifiant de ce serveur CDN au client, celui-ci établissant une session avec ce serveur CDN pour effectivement obtenir les données par exemple en établissant une session HTTPS (HyperText Transfer Protocol Secure), par exemple de type HTTP over TLS (Transport Layer Security). Ces types d'architecture permettent notamment de limiter les accès vers le serveur d'origine, de réduire la consommation de bande passante dans les réseaux de communication en rapprochant les serveurs de données des terminaux, et d'améliorer la qualité d'expérience pour les clients souhaitant accéder à ces données.

Ainsi, un terminal transmettant une requête en vue d'obtenir un identifiant d'un serveur de données vers un serveur DNS (Domain Name Server) d'un domaine d'origine, par exemple CSP.com, est redirigée vers un serveur DNS d'un CDN d'un opérateur d'un réseau de communications ou d'un opérateur de serveurs CDNs par exemple, en charge de gérer des serveurs CDNs aptes à livrer le contenus requis par le terminal. A titre d'exemple, dans le contexte des architectures « Edge Computing » destinées à être mises en œuvre dans les réseaux de cinquième génération (5G), la livraison de contenus par des serveurs proches des terminaux permet de réduire la latence relative à la distribution des contenus et donc d'améliorer la qualité d'expérience des clients et de fiabiliser le service d'accès aux données en distribuant les serveurs dans différents domaines, un domaine représentant un ensemble de ressources d'un réseau de communications administrées par une même entité.

Dans le cas des architectures CDN, un serveur CDN doit livrer le contenu en utilisant le nom de domaine d'origine afin que le terminal puisse vérifier et s'assurer que le contenu reçu, qui ne provient d'un serveur du domaine d'origine, provient d'un serveur d'un domaine ayant un accord avec le serveur d'origine. Le terminal compare en effet la concordance entre le domaine demandé dans la requête DNS initialement émise et les informations sur le nom de domaine présentes dans un certificat envoyé par le serveur de données du domaine CDN. Cependant, pour que cette comparaison puisse être effectuée, il faut que le domaine d'origine transmette le certificat au serveur domaine CDN ainsi qu'une clé privée associée au domaine d'origine. La transmission de la clé privée pose en effet des problèmes de confidentialité et de sécurité qu'il convient de résoudre. Le terminal obtient ainsi un contenu d'un serveur d'un domaine dont il ne connaît pas le lien avec le domaine d'origine que le terminal a sollicité pour obtenir le contenu. Le document draft-sheffer-acme-star-delegation-01 décrit une solution permettant une seule délégation par un serveur d'origine à un serveur tiers alors que les architectures de réseaux de communication interconnectent le plus souvent un nombre plus important de domaines, ces domaines n'ayant pas nécessairement tous des accords avec le serveur d'origine.

Un domaine X intervenant par exemple dans la livraison d'un contenu peut en outre avoir des accords avec différents domaines, correspondant à des fournisseurs distincts de services, et peut lui-même solliciter un autre domaine Y plus approprié pour fournir un identifiant de serveur de données. Ainsi la fourniture d'un identifiant d'un serveur de données à un terminal peut faire intervenir un nombre important de domaines successifs sans contrôle à priori du domaine d'origine initialement sollicité par le terminal. Le partage de clés privées entre les différents domaines n'est cependant pas souhaitable pour des raisons de sécurité et des domaines différents peuvent intervenir dans la fourniture de l'identifiant du serveur de données au terminal en fonction du type de données et/ou du créneau horaire voire en fonction des accords entre les différents domaines pour certains services. Selon les techniques antérieures, il n'est en outre pas possible de contrôler la fiabilité du service d'accès aux données par des contrôles à priori, c'est-à-dire avant la connexion du terminal au serveur de données identifié dans la réponse DNS transmise au terminal, ou bien à postériori, c'est-à-dire une fois que le terminal s'est connecté au serveur de données. Le document US 2014/108672 A1 décrit un procédé de routage dans un réseau de distribution de contenus (CDN) permettant à un terminal souhaitant obtenir un contenu de le rediriger vers une adresse à laquelle il émet une requête de service, cette requête étant transmise avec une information cookie à des fins d'authentification et de suivi d'accès.

Le document WO 2018/115647 A1 décrit un procédé de validation d'une livraison d'un contenu permettant de valider l'adresse d'un serveur de livraison assurant effectivement la livraison d'un contenu à un client à partir d'une information reçue d'un serveur du fournisseur de contenus initialement sollicité.

Le document draft-sheffer-acme-star-delegation-00 décrit un profil du protocole ACME (en anglais Automated Certificate Management Environment) qui permet à un propriétaire d'un identifiant, tel qu'un nom de domaine, de déléguer à une tierce partie un certificat associé à l'identifiant. Cela permet à un CDN (en anglais Content Delivery Network - tierce partie) de terminer une session TLS (en anglais Transport Layer Security) pour le compte d'un fournisseur de contenus, propriétaire d'un nom de domaine.

La présente invention a pour objet d'apporter des améliorations par rapport à l'état de la technique.

### 3. Exposé de l'invention

L'invention vient améliorer la situation à l'aide d'un procédé de redirection, relative à l'identification d'un serveur de données apte à délivrer un contenu à un terminal, le procédé étant mis en œuvre par un serveur de résolution d'une architecture de communication, suite au transfert vers un deuxième serveur de noms d'un deuxième domaine d'un message d'obtention d'un identifiant du serveur de données dans le deuxième domaine, reçu du terminal, la procédé comprenant :
- une étape de réception en provenance du deuxième serveur de noms d'un message de redirection vers un premier domaine, ledit message de redirection incluant une chaîne de délégation comprenant une première donnée de redirection du deuxième domaine vers le premier domaine,
- au moins une étape d'émission à destination d'un premier serveur de noms du premier domaine d'un message d'obtention de l'identifiant du serveur de données dans le premier domaine, le message comprenant la chaîne de délégation reçue, - au moins une étape de réception en provenance du premier serveur de noms d'un message d'instruction comprenant la chaine de délégation modifiée avec l'ajout d'une deuxième donnée de redirection.

La chaîne de délégation, comprend une suite de redirections depuis le deuxième domaine ou domaine d'origine vers le premier domaine, comprenant le serveur de données, ou serveur de livraison, dont un identifiant sera transmis à un terminal. Cette chaîne est élaborée de façon récursive par des différents serveurs de noms des différents domaines intervenant dans la livraison de l'identifiant du serveur de données stockant un contenu demandé par un terminal. Ainsi, chaque serveur de noms sollicité par le serveur de résolution ajoute à la chaîne de délégation une redirection du domaine dans lequel il se situe vers un autre domaine, et il indique au serveur de résolution de solliciter cet autre domaine pour obtenir l'identifiant du serveur de données. De proche en proche, le serveur de résolution établit ainsi la chaîne de délégation. Il contacte un serveur de noms (ou serveur DNS) du domaine n vers lequel un serveur de noms du domaine n-1 l'a redirigé en y ajoutant une information de redirection (domaine n-1 > domaine n) ajoutée à la chaîne, et ce serveur du domaine n communique au serveur de résolution un domaine n+1, pour lequel il ajoute en outre une redirection à la chaîne de délégation (n > n+1). La chaîne de délégation se termine lorsque le serveur de noms d'un domaine sollicité est effectivement en mesure de livrer l'identifiant d'un serveur de données en capacité de livrer le contenu au terminal, cette livraison étant le plus souvent établie via une connexion sécurisée.

Dans le procédé, le deuxième domaine est le domaine d'origine initialement sollicité par le serveur de résolution suite à un message de requête d'obtention reçu du terminal. Le premier domaine et le premier serveur de noms représentent l'ensemble des domaines intervenant dans la chaîne de délégation pour finalement fournir l'identifiant du serveur de données. L'étape d'émission et l'étape de réception à destination ou en provenance du serveur de noms correspond à un ensemble d'étapes d'émission (respectivement de réception) à (respectivement en provenance) des serveurs de noms de domaines successifs jusqu'à ce que le message d'instruction comprenne un identifiant du serveur de données et une redirection du domaine vers lui-même.

Le procédé de redirection permet de mettre en œuvre une délégation dynamique dans le temps (les redirections peuvent en effet varier dans le temps) et dans l'espace (pour un même contenu, un serveur d'un domaine donné peut solliciter différents domaines notamment pour équilibrer la charge sur les domaines). Le procédé permet en outre d'assurer un service d'élaboration de la chaîne de proche en proche, via les redirections successives, améliorant ainsi la disponibilité et la fiabilité de la chaîne de délégation établie en évitant qu'une chaîne ne soit établie par un seul serveur de noms d'un domaine qui peut ne pas avoir la connaissance des différents domaines pouvant intervenir. Le procédé évite en outre à ce domaine de passer des accords, le cas échéant, avec un grand nombre de domaines mais de mettre en œuvre des accords entre domaines successifs.

Selon un aspect de l'invention, le procédé de redirection comprend en outre une étape d'émission à destination du deuxième serveur de noms d'un message de contrôle comprenant la chaîne de délégation modifiée avec la deuxième donnée de redirection.

Selon l'invention, l'élaboration de la chaîne est réalisée de proche en proche en sollicitant un serveur de noms du domaine indiqué dans l'information de redirection ajoutée à la chaîne par le serveur du domaine précédent sollicité. Le serveur de résolution peut avantageusement transmettre la chaîne modifiée, notamment une fois qu'elle est complète et lorsque l'identifiant du serveur de données a été reçu, au deuxième serveur de noms du deuxième domaine initialement sollicité pour que ce deuxième serveur valide ou non la chaîne établie sachant que la chaîne peut comprendre plusieurs redirections successives entre domaines.

Selon un autre aspect de l'invention, le procédé de redirection comprend en outre une étape de réception en provenance du deuxième serveur de noms d'un message de validation, incluant la chaîne de délégation modifiée et comprenant en outre un paramètre de validation de la chaîne.

Le serveur de noms du deuxième domaine peut avantageusement valider la chaîne de délégation complète, par exemple si tous les domaines de la chaîne sont compatibles avec une politique de sécurité du gestionnaire du deuxième domaine. Le message de validation permet au serveur de résolution de s'assurer de la validité de toute la chaîne. Par exemple, l'ajout à la chaîne reçue d'une redirection du deuxième domaine vers le domaine dans lequel se trouve le serveur de donnée, donc le dernier domaine de la chaîne reçue par le deuxième serveur de noms, en plus des redirections successives entre les différents domaines ajoutés lors de l'élaboration de la chaîne par redirections successives, permet d'indiquer au serveur de résolution que la chaîne de délégation complète est validée par l'opérateur du deuxième domaine.

Selon un autre aspect de l'invention, le procédé de redirection comprend en outre une étape de réception en provenance du deuxième serveur de noms d'un message d'invalidation comprenant en outre un paramètre de non-validation de la chaîne.

Le serveur de noms du domaine d'origine peut refuser la chaîne de délégation élaborée par le serveur de résolution, par exemple parce qu'un des domaines présents dans la chaîne n'a pas d'accord avec le deuxième domaine ou domaine d'origine, ou parce que la chaîne de délégation est proche d'expirer. Dans ce cas, le serveur de noms renvoie la chaîne de délégation reçue du serveur de résolution et peut y ajouter un paramètre d'invalidité indiquant ainsi au serveur de résolution que la chaîne est invalide. Dans le cas où le deuxième serveur de noms ne valide pas la chaîne de délégation depuis le deuxième domaine jusqu'au premier domaine, alors le résolveur de noms peut réémettre un message de requête de l'identifiant du serveur de données vers le serveur de noms du deuxième domaine, le message de requête comprenant la chaîne de délégation et le paramètre d'invalidité. Ainsi, si le deuxième serveur de noms identifie un serveur de données dans le deuxième domaine, il peut en informer le serveur de résolution sans déléguer la fourniture de l'identifiant à un autre domaine ou bien il peut initier de nouveau une délégation pour qu'un identifiant d'un serveur de données et une autre chaîne de délégation associée soit transmis au serveur de résolution.

Les différents aspects du procédé de redirection qui viennent d'être décrits peuvent être mis en œuvre indépendamment les uns des autres ou en combinaison les uns avec les autres.

L'invention concerne également un procédé de modification d'une chaîne de délégation, relative à la fourniture d'un identifiant d'un serveur de données, apte à délivrer un contenu à un terminal, le procédé étant mis en œuvre par un premier serveur de noms d'un premier domaine, et comprenant:
- au moins une étape de réception en provenance du serveur de résolution d'un message d'obtention d'un identifiant du serveur de données dans le premier domaine, le message comprenant une chaîne de délégation incluant une première donnée de redirection d'un deuxième domaine vers le premier domaine,
- au moins une étape de modification de la chaîne de délégation reçue par l'ajout d'une deuxième donnée de redirection,
- au moins une étape d'émission à destination du serveur de résolution d'un message d'instruction comprenant la chaine de délégation modifiée.

Un serveur de nom d'un domaine intervenant dans la fourniture d'un identifiant d'un serveur de données redirige une requête d'obtention de l'identifiant, initialement émise par un terminal et relayée par un serveur de résolution, vers un serveur de noms d'un autre domaine s'il ne peut pas fournir cet identifiant ou s'il considère qu'un autre domaine est en meilleure capacité de fournir l'identifiant, ou encore s'il sait quel autre domaine solliciter pour fournir cet identifiant. Le serveur de noms ajoute en outre l'indication de redirection dans une chaîne de délégation comprise dans le message d'instruction transmis au serveur de nom de l'autre domaine. De proche en proche, la suite de redirections entre le deuxième domaine et le domaine dans lequel se trouve l'identifiant est construite, permettant ainsi de constituer une chaîne de délégation comprenant les différentes redirections déterminées entre les domaines successivement sollicités. Ces redirections sont exécutées jusqu'à ce qu'un serveur de noms d'un domaine puisse transmettre l'identifiant du serveur de données au serveur de résolution.

Selon un autre aspect de l'invention, dans le procédé de modification, la deuxième donnée de redirection ajoutée est une redirection du premier domaine vers le premier domaine.

L'information de redirection du premier domaine vers lui-même permet au serveur de résolution en charge de la transmission de la chaîne au terminal de pouvoir identifier la dernière redirection et de pouvoir transmettre sans délai l'identifiant du serveur de données ainsi que la chaîne de délégation complète au terminal.

Selon un autre aspect de l'invention, dans le procédé de modification, la deuxième donnée de redirection est une donnée d'invalidité de la chaîne.

Chaque serveur de noms intervenant dans les redirections et donc dans l'élaboration de la chaîne de délégation peut indiquer au serveur de résolution que la chaîne de délégation n'est pas valide. Ce peut être le cas si la précédente redirection de la chaîne redirige vers un domaine non fiable ou si une durée de validité de la chaîne est proche d'être atteinte. Le serveur de résolution peut alors prendre toute décision pour en informer le terminal et/ou pour déterminer une nouvelle chaîne.

Selon un autre aspect de l'invention, dans le procédé de modification, la deuxième donnée de redirection ajoutée est une redirection du premier domaine vers un troisième domaine.

Le message d'instruction informe avantageusement le serveur de résolution que la requête d'obtention de l'identifiant du serveur de données doit être transmise à un serveur de noms d'un troisième domaine si le serveur de données n'est pas dans le premier domaine ou si le premier serveur de noms préfère indiquer au serveur de résolution qu'un domaine délégué peut transmettre l'identifiant du serveur de données. Le message d'instruction comprend par exemple un message DNS de type CNAME. La donnée de redirection, dans ce cas, est une redirection du premier domaine vers le troisième domaine, ajouté à une redirection existante du deuxième domaine vers le premier domaine.

Selon un autre aspect de l'invention, dans le procédé de modification, le message d'instruction comprend en outre un identifiant du serveur de données dans le premier domaine.

Si le serveur de données dont un identifiant est demandé par le terminal se situe dans le deuxième domaine, alors le message d'instruction ne comprend pas de donnée de redirection mais un identifiant d'un serveur de données dans le premier domaine, par exemple une adresse IP appartenant au plan d'adressage du premier domaine. Il s'agit alors d'une adresse IP d'un serveur de données tel qu'un serveur « Edge » du domaine. Le serveur de résolution reçoit ainsi l'information souhaitée initialement, c'est-à-dire lors de la sollicitation du deuxième serveur de noms du deuxième domaine. Le premier serveur de noms transmet alors l'identifiant du serveur de données, mais aussi l'ensemble des redirections entre domaines ayant conduit à l'identification du serveur de données dans un domaine différent de celui sollicité initialement. Le serveur de résolution peut ainsi s'assurer que le premier domaine a été sélectionné conformément aux délégations successives via possiblement d'autres domaines intermédiaires. La chaîne de délégation comprend possiblement une redirection du premier domaine vers lui-même indiquant ainsi au serveur de résolution la fin de la chaîne de délégation.

Selon un autre aspect de l'invention, dans le procédé de modification, la chaîne modifiée comprend en outre une donnée de signature relative au premier domaine. La chaîne peut avantageusement être signée de proche en proche par les serveurs de noms des domaines respectifs de la chaîne de délégation pour authentifier les serveurs de noms et s'assurer de l'authenticité des domaines intervenant dans l'élaboration de la chaîne de délégation.. Chaque domaine peut ainsi ajouter sa propre signature, par exemple avec sa clé privée, qui sera déchiffrée par le serveur de résolution voire par le terminal si elle lui parvient permettant de s'assurer que les domaines intervenant dans la chaîne sont authentiques.

Selon un autre aspect de l'invention, dans le procédé de modification, la chaîne modifiée comprend en outre une durée de validité de la chaîne.

Un domaine peut indiquer à un autre domaine que la redirection ajoutée à la chaîne de délégation existante n'est seulement valide que pour une durée définie, autorisant ainsi des politiques de redirection entre domaines dynamiques dans la durée et la mise en œuvre de redirections pour répondre par exemple à des congestions de durée limitée dans les domaines.

Selon un autre aspect de l'invention, dans le procédé de modification, l'au moins une étape de modification comprend en outre une étape de validation de la chaîne reçue et une étape de signature de la deuxième donnée de redirection ajoutée.

Le second serveur peut avantageusement valider la chaîne reçue, par exemple en vérifiant l'identité du domaine ayant ajouté la précédente délégation. Il signe en outre la redirection qu'il ajoute à la chaîne de validation, par exemple avec une clé privée, de façon à ce que le serveur de noms du domaine suivant puisse à son tour vérifier l'authenticité de la redirection ajoutée par le serveur de noms.

Les différents aspects du procédé de modification qui viennent d'être décrits peuvent être mis en œuvre indépendamment les uns des autres ou en combinaison les uns avec les autres.

L'invention concerne également un dispositif de redirection, relative à l'identification d'un serveur de données apte à délivrer un contenu à un terminal, dans un serveur de résolution d'une architecture de communication, comprenant :
- un module de transfert, apte à transférer vers un deuxième serveur de noms d'un deuxième domaine un message d'obtention d'un identifiant du serveur de données dans un deuxième domaine, reçu d'un terminal,
- un récepteur,
- apte à recevoir en provenance du deuxième serveur de noms un message de redirection vers un premier domaine, ledit message de redirection incluant une chaîne de délégation comprenant une première donnée de redirection du deuxième domaine vers le premier domaine,
- apte à recevoir en provenance d'un premier serveur de noms au moins un message d'instruction comprenant la chaine de délégation modifiée avec l'ajout d'une deuxième donnée de redirection,
- un émetteur, apte à émettre à destination du premier serveur de noms au moins un message d'obtention d'un identifiant du serveur de données dans le premier domaine, le message comprenant la chaîne de délégation reçue.

Ce dispositif, apte à mettre en œuvre dans tous ses modes de réalisation le procédé de redirection qui vient d'être décrit, est destiné à être mis en œuvre dans un résolveur de noms, par exemple un résolveur DNS, et peut être instancié dans un terminal, fixe ou mobile ou bien dans un équipement d'accès d'un réseau domestique ou professionnel (box) ou bien dans un équipement spécifique d'un réseau d'opérateur. L'invention concerne également un dispositif de modification d'une chaîne de délégation relative à la fourniture d'un identifiant d'un serveur de données, apte à délivrer un contenu à un terminal, mis en œuvre dans un premier serveur de noms d'un premier domaine, et comprenant:
- un récepteur, apte à recevoir en provenance d'un serveur de résolution au moins un message d'obtention d'un identifiant du serveur de données dans le premier domaine, le message comprenant une chaîne de délégation incluant une première donnée de redirection d'un deuxième domaine vers le premier domaine,
- un module de modification, apte à modifier au moins une fois la chaîne de délégation reçue par l'ajout d'une deuxième donnée de redirection,
- un émetteur, apte à émettre à destination du serveur de résolution au moins un message d'instruction comprenant la chaine de délégation modifiée.

Ce dispositif, apte à mettre en œuvre dans tous ses modes de réalisation le procédé de modification qui vient d'être décrit, est destiné à être mis en œuvre dans un serveur de noms, par exemple un serveur DNS ou dans tout type de serveur associant un identifiant (adresse IP, adresse mail, identifiant privé d'un réseau) à un nom. L'invention concerne aussi un système de redirection relative à l'identification d'un serveur de données apte à délivrer un contenu à un terminal, comprenant:
- un dispositif de redirection,
- un dispositif de modification.

L'invention concerne aussi un programme d'ordinateur comprenant des instructions pour la mise en œuvre des étapes du procédé de redirection qui vient d'être décrit, lorsque ce programme est exécuté par un processeur et un support d'enregistrement lisible par un dispositif de redirection sur lequel est enregistré le programmes d'ordinateur.

L'invention concerne aussi un programme d'ordinateur comprenant des instructions pour la mise en œuvre des étapes du procédé de modification qui vient d'être décrit, lorsque ce programme est exécuté par un processeur et un support d'enregistrement lisible par un dispositif de modification sur lequel est enregistré le programmes d'ordinateur.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions des programmes d'ordinateur tel que mentionnés ci-dessus.

Le support d'informations peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple sur un disque dur.

D'autre part, le support d'informations peut être un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, le support d'informations peut être un circuit intégré dans lequel les programmes sont incorporés, le circuit étant adapté pour exécuter ou pour être utilisé dans l'exécution des procédés en question.

### 4. Brève description des dessins

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels:
[Fig 1] La figure 1 présente une vue simplifiée d'une architecture de communication dans laquelle est mise en œuvre l'invention selon un aspect de l'invention,
[Fig 2] La figure 2 présente l'élaboration d'une chaîne de délégation selon un aspect de l'invention,
[Fig 3] La figure 3 présente un aperçu du procédé d'acquisition d'un identifiant d'un premier serveur de données selon un mode de réalisation de l'invention,
[Fig 4] La figure 4 présente un exemple de structure d'un dispositif de redirection selon un aspect de l'invention,
[Fig 5] La figure 5 présente un exemple de structure d'un dispositif de modification selon un aspect de l'invention.

### 5. Description des modes de réalisation

Dans la suite de la description, on présente des modes de réalisation de l'invention dans une infrastructure de communication. Cette infrastructure peut être fixe ou mobile et l'invention peut être destinée à l'acquisition d'un identifiant d'un serveur de données pour des clients d'entreprise ou des clients dits résidentiels ou grand public.

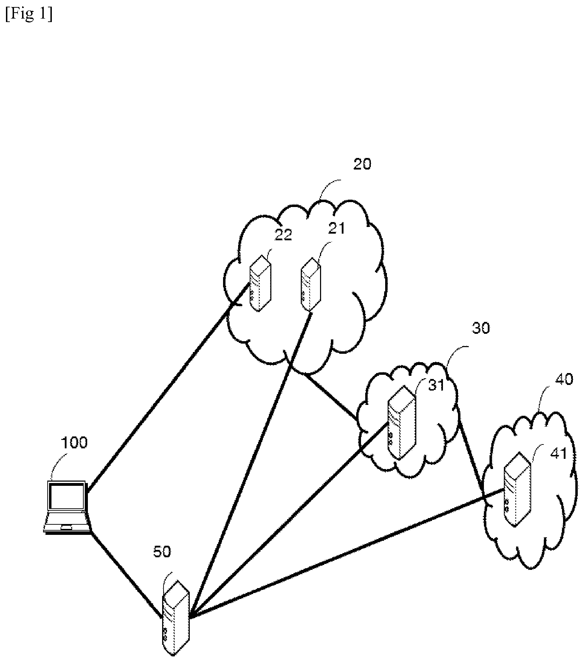

On se réfère tout d'abord à la figure 1 qui présente une vue simplifiée d'une architecture de communication dans laquelle est mise en œuvre l'invention selon un aspect de l'invention.

Un terminal 100, qui peut être un terminal fixe ou un terminal mobile, souhaite obtenir un contenu d'un serveur distant en utilisant le protocole HTTPS. Par exemple, le contenu du serveur distant est le suivant : https://www.abc.com. Le terminal 100 transmet donc une requête de résolution du nom https://www.abc.com pour obtenir un identifiant réseau, par exemple une adresse IP (Internet Protocol) de type IPv4 ou IPv6, correspondant à ce nom. Le terminal 100 sollicite donc un serveur 50 de résolution pour obtenir l'identifiant réseau du serveur stockant le contenu. La requête d'obtention de l'identifiant du serveur d'origine envoyée par le terminal 100, selon une alternative, peut comprendre un paramètre de délégation indiquant notamment que le terminal 100 supporte la fonction « délégation » et ordonnant au serveur 50 de résolution de requérir les infos relatives à la délégation. Le serveur 50 de résolution est par exemple un dispositif de type « Résolveur DNS (Domain Name System)». Ce résolveur DNS peut être intégré au terminal 100, ou bien mis en œuvre dans un réseau local auquel est attaché le terminal 100, ou bien encore exploité par un opérateur gérant le réseau d'accès auquel est attaché le terminal 100. Le serveur 50 de résolution, n'ayant pas d'enregistrement associant un identifiant réseau au nom, correspondant dans ce cas à une adresse, initie un procédé de redirection en vue d'établir une chaîne de délégation pour obtenir l'identifiant d'un serveur de données hébergeant le contenu. Il sollicite un serveur 41 de noms, par exemple un serveur DNS, du domaine 40 d'origine abc.com pour obtenir l'identifiant réseau en transmettant un message de requête comprenant le paramètre de délégation reçu du terminal 100. Le serveur 50 de résolution, selon un exemple, peut avoir été redirigé vers le serveur 41 de noms du domaine d'origine après avoir transmis une requête lui permettant d'obtenir un identifiant du serveur 41 de noms à d'autres serveurs, tels que des serveurs dits racine et/ou des serveurs du domaine .com avant de pouvoir effectivement joindre le serveur 41 de noms.

Il est considéré dans cette demande que le contenu https://www.abc.com est répliqué dans des serveurs dits locaux permettant aux terminaux d'accéder au contenu répliqué avec une moindre latence et permettant une consommation moindre des ressources de communication. Le serveur 41 détermine un autre domaine 30 vers lequel rediriger le serveur 50 de résolution. Le serveur 41 de noms répond au serveur 50 de résolution en transmettant un message d'instruction indiquant que l'adresse IP d'un serveur stockant le contenu peut être obtenue en transmettant une requête à un serveur 31 de noms du domaine 30. Le message de redirection comprend ainsi une chaîne de délégation indiquant la redirection par le domaine 40 vers le domaine 30. A la réception de ce message de redirection, le serveur 50 de résolution émet un message de requête d'obtention de l'identifiant d'un serveur stockant le contenu https://www.abc.com à destination du serveur 31 de noms du domaine 30. Cette requête comprend en outre la chaîne de délégation reçue du serveur 41. Le serveur 31 répond au serveur 50 de résolution en le redirigeant vers le serveur 21 de noms du domaine 20 après avoir modifié la chaîne de délégation avec la nouvelle redirection ajoutée du domaine 30 vers le domaine 20. Cette chaîne modifiée est également transmise au domaine 20.

Le serveur 50 de résolution sollicite ensuite le serveur 21 de noms, conformément à la redirection obtenue précédemment, en joignant la chaîne modifiée, pour obtenir le contenu https://www.abc.com. Le serveur 21 connaissant l'adresse IP d'un serveur 22 dans le domaine 20, hébergeant le contenu demandé par le terminal 100, il la communique au serveur 50 de résolution dans un message d'instruction comprenant en outre la chaine de délégation complète depuis le domaine d'origine 40 jusqu'au domaine 20, c'est-à-dire du domaine 40 vers le domaine 30 puis du domaine 30 vers le domaine 20, dans lequel se trouve le serveur 22 de données en capacité de délivrer le contenu au terminal 100.

Le serveur 50 de résolution transmet ce message d'information au terminal 100 qui obtient alors l'adresse IP du serveur 22 de données vers laquelle transmettre une requête d'obtention du contenu et la chaîne de délégation complète reçue du serveur 50 de résolution. Le terminal 100, selon un exemple, émet ensuite un message d'établissement de connexion, tel qu'un message de type HTTP/TLS (Transport Layer Security) au serveur 22, ce message comprenant la chaîne de délégation reçue. Le serveur 22, en retour, émet un message d'acceptation de la connexion en provenance du serveur 22 de livraison du contenu à destination du terminal 100.

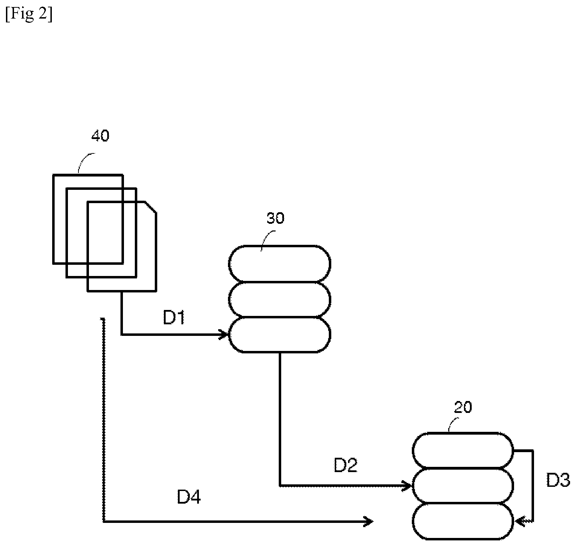

En relation avec la figure 2, on présente l'élaboration d'une chaîne de délégation, comprenant une suite de redirections, selon un aspect de l'invention.

Dans cette figure, les trois domaines 20, 30, 40 présentés dans la figure 1 sont également représentés. Il est considéré dans ce mode de réalisation, que les trois domaines 20, 30, 40 correspondent à des réseaux CDN (Content Delivery Networks) mais il pourrait également s'agir de réseaux d'opérateurs ou bien encore d'infrastructures de stockage (cloud) localisés à différents endroits. Le domaine 40 comprend un serveur de données dont un terminal, non représenté sur cette figure, souhaite obtenir l'identifiant pour ensuite requérir des données de ce serveur. L'identifiant du serveur de données du domaine 40 n'est pas transmis au terminal mais une suite de redirections vont s'opérer entre les différents domaines 40, 30, 20 pour qu'un serveur de données, plus proche du terminal et/ou plus performant pour satisfaire la demande du terminal et/ou ayant plus de ressources pour transmettre les données au terminal soit identifié et transmis au terminal. Dans le cas présent, un identifiant d'un serveur de données du domaine CDN 20 sera transmis au terminal. Une suite de redirections du domaine 40 jusqu'au domaine 20 doit être mis en place de façon transparente pour le terminal qui doit pouvoir vérifier et adapter son comportement en fonction des redirections. Selon une alternative, le domaine 40 dit domaine d'origine peut également valider ou non les différentes redirections, par exemple en fonction des accords avec les différents domaines présents dans la chaîne qui comprend les redirections successives. Cette figure 2 présente les redirections d'une chaîne de délégation ainsi que les différentes informations potentiellement présentes dans la chaîne mais ne présente pas les échanges avec un serveur de résolution. La figure 2 présente une vue synthétique d'un procédé de redirection entre domaines, les éléments D1, D2, D3, D4 ne représentant pas des échanges entre les domaines 40, 30, 20 mais le principe d'élaboration d'une chaîne de délégation à partir des informations de redirections successives.

Lors de la réception par un serveur de noms du domaine 40 d'une requête pour obtenir l'identifiant (nom, adresse IP...) d'un serveur de données hébergeant un contenu désiré par un terminal, le serveur de noms (DNS) peut indiquer l'identifiant d'un serveur de données (serveur HTTP, serveur FTP (File Transfer Protocol)...) du domaine 40 ou bien rediriger le serveur de résolution, mandataire du terminal pour l'obtention de l'identifiant, vers un serveur de noms d'un autre domaine. Cette deuxième option est utilisée par le serveur DNS du domaine 40 qui délègue à un serveur DNS du domaine 30 la fourniture d'un identifiant du serveur de données. Le domaine 40 délègue au domaine 30 la réponse à la requête pour obtenir l'identifiant envoyée par le serveur de résolution. Et le domaine 30 fait de même pour déléguer vers le domaine 20 la réponse à transmettre au serveur de résolution contribuant ainsi à l'élaboration de la chaîne de délégation. Dans la figure 2, D1 comprend des informations de délégations du domaine 40 vers le domaine 30, ces informations étant transmises au serveur de résolution, et D2 comprend des informations de délégation du domaine 30 vers le domaine 20, également transmises au serveur de résolution. La chaîne comprend les informations D4 de délégation complète du domaine 40 vers le domaine 20 incluant les informations D1 et D2 ainsi que possiblement les informations D3 de redirection du domaine 20 vers lui-même. La chaîne de délégation peut ainsi comprendre un nombre important d'informations de délégations successives. La chaîne complète, lorsqu'elle comprend les informations D3 de délégation du domaine 20 vers lui-même permet au serveur de résolution d'identifier la fin de la chaîne de délégation en vue de faciliter les traitements futurs et d'indiquer ainsi que la chaîne est complète. Un serveur de noms d'un domaine indique ainsi un autre domaine que le serveur de résolution doit solliciter, après avoir modifié la chaîne de délégation avec l'ajout d'une redirection vers le domaine que le serveur de résolution doit solliciter.

Pour obtenir la chaîne complète de délégation, il est nécessaire d'interroger un serveur de noms de tous les domaines impliqués dans la résolution DNS permettant finalement d'obtenir l'identifiant du serveur de données. La chaîne D1 de délégation comprend, selon un exemple, un ensemble d'éléments correspondant à un bloc, tels que:
- From : Nom du domaine déléguant - CDN1 40
- To : Nom du domaine délégué - CDN2 30
- Start_time : Heure de démarrage de la délégation (UTC Time)
- Validity : Temps en seconde depuis Start_time
- signature_algorithm : signature hash + algorithme - nom de l'algorithme utilisé pour vérifier la chaîne de délégation. Les valeurs possibles sont définies dans le document IETE RFC 8446 section 4.2.3
- Signature : contient la signature avec un certificat utilisé pour authentifier le nom du domaine présent dans le champ « From » de

Le champ signature, ajouté selon une alternative, permet de prouver l'authenticité de chaque redirection d'une chaîne de délégation, implicitement en vérifiant le contenu et l'identité du signataire. Il est appliqué de façon itérative quand une nouvelle redirection est ajoutée à une chaîne existante. Chaque nouveau bloc, correspondant à une délégation d'un domaine à un autre, acquitte la précédente délégation et prouve l'authenticité de la nouvelle. La clé privée utilisée pour signer chaque bloc est celle du certificat du domaine qui est en train de déléguer (champ From). Il est à noter que l'information de redirection est composée des informations des champs « from » et « to » d'un bloc.

Les informations de la chaîne D4 comprennent donc les 2 blocs de données D1 et D2 correspondant aux délégations successives du domaine CDN1 40 vers le domaine CDN2 30 puis du domaine CDN2 30 vers le domaine CDN3 20 et possiblement un troisième bloc de données D3 correspondant à une délégation du domaine CDN3 20 vers lui-même.

Les informations de redirection des blocs, donc les champs « From » et «To» doivent être présentes alors que les autres informations des blocs, relatifs à la durée de délégation et à la sécurité, sont optionnelles. Les chaînes, composées de blocs, sont reçues par les serveurs de noms des domaines, en provenance d'un serveur de résolution, puis modifiées en ajoutant un bloc comprenant une redirection et possiblement une durée de vie de la chaîne ainsi qu'une signature, puis renvoyé au serveur de résolution. Ainsi, le serveur de résolution sollicite un serveur de noms du domaine 40, reçoit en retour un message de redirection comprenant une chaîne de délégation comprenant les informations D1 de redirection vers le domaine 30. Le serveur de résolution émet un message d'obtention de l'identifiant du serveur de données, comprenant la chaîne reçue, à un serveur de noms du domaine 30. Ce serveur de noms, n'étant pas dans un domaine comprenant un identifiant du serveur de données, identifie un domaine vers lequel rediriger le serveur de résolution, et modifie la chaîne en ajoutant le bloc de données D2. Il envoie la chaîne (D1 + D2) dans un message d'instruction au serveur de résolution. Le serveur de résolution sollicite un serveur de noms du domaine 20. Le domaine 20 comprenant un serveur de données, le serveur de noms modifie la chaîne reçue en ajoutant le bloc D3 et transmet la chaîne modifiée, comprenant les blocs de données D1, D2, D3 au serveur de résolution.

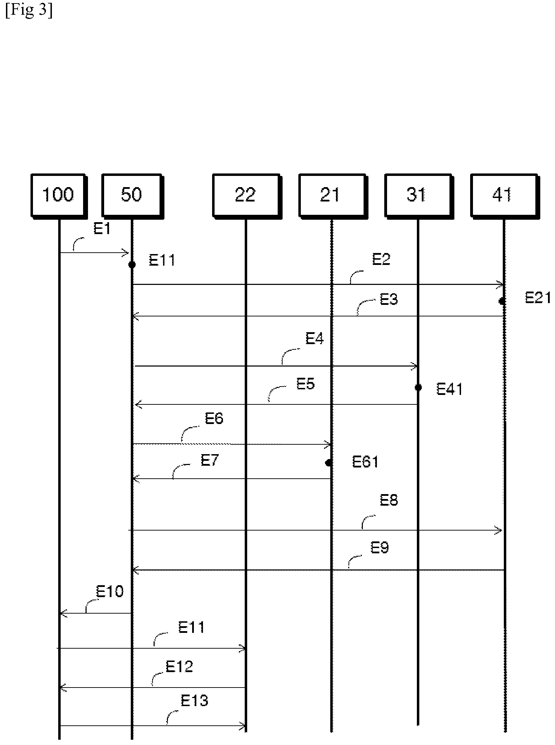

On se réfère maintenant à la figure 3 qui présente un aperçu du procédé d'acquisition d'un identifiant d'un serveur de données selon un mode de réalisation de l'invention.

Lors de l'étape E1, le terminal 100 transmet un message de requête d'obtention d'un identifiant d'un serveur de données, représenté ici par une requête DNS, au dispositif 50 qui est de type résolveur DNS. Cette requête DNS est envoyée par le terminal 100 pour connaître l'identité d'un serveur de données dans un domaine donné en capacité de délivrer un contenu requis par le terminal 100. La requête DNS est par exemple de type « DNS Query A cdn.co.com » et le terminal souhaite obtenir une adresse IP correspondant à l'enregistrement de type A (adresse) du nom de domaine cdn.co.com. Selon un exemple, cette requête comprend un paramètre délégation, par exemple une chaîne de délégation vide Delegation (), car aucune délégation n'a eu lieu pour l'instant. Le résolveur DNS 50 peut être dans le terminal 100, dans un réseau local auquel est attaché le terminal 100 ou bien encore dans un réseau géré par un opérateur.

Le résolveur DNS 50 met en place lors de l'étape E11 un processus pour déterminer une chaîne de délégation associée à l'acquisition de l'identifiant du serveur de données requis par le terminal 100. Cette détermination est un processus itératif entre le résolveur DNS 50 et les différents serveurs de noms des domaines impliqués dans les redirections comprises dans la chaîne de délégation.

Le résolveur DNS, suite à la requête émise par le terminal 100 lors de l'étape E1, émet un message de requête d'un identifiant d'un serveur de données correspondant à cdn.co.com lors de l'étape E2. Ce message est en fait transmis à un serveur DNS dit d'autorité pour le domaine cdn.co.com. Sachant que l'on a dans cdn.co.com au moins trois domaines, à savoir, les domaines .com, co.com et cdn.co.com, le résolveur DNS 50 peut solliciter un serveur DNS d'autorité du domaine .com puis un serveur DNS d'autorité du domaine co.com avant de solliciter un serveur DNS du domaine cdn.co.com. Dans l'exemple de la figure 3, seul l'envoi du message de requête vers un serveur DNS 41 du domaine cdn.co.com est représenté. Lors de l'étape E2, le serveur DNS 41, identifié comme le serveur d'origine car il est le premier serveur DNS sollicité par le résolveur DNS 50 pour obtenir l'identifiant d'un serveur de données. Le résolveur DNS 50 inclut une chaîne de délégation vide, possiblement reçu du terminal 100, dans le message de requête transmis au serveur DNS 41. Le résolveur DNS 50 transmet le message suivant :

```
    DNS query A cdn.co.com
    Extension: Delegation ()
```

Lors de l'étape E21, le serveur DNS 41 modifie la chaîne de délégation en ajoutant une redirection du domaine cdn.co.com vers le domaine co.cdn1.com. Lors de l'étape E3, le serveur DNS 41, ayant déterminé un domaine vers lequel le résolveur DNS 50 doit être redirigé et après avoir modifié la chaîne en conséquence lors de l'étape E21, envoie un message de redirection au résolveur DNS 50 pour lui indiquer que le contenu peut être obtenu auprès du domaine co.cdn1.com. Il crée ainsi le premier niveau de délégation vers co.cdn1.com et a donc modifié la chaîne de délégation en ajoutant un bloc de données à la chaîne de délégation reçue lors de l'étape E2. Il s'agit de la première occurrence de la chaîne de délégation, cette occurrence correspondant à une redirection du domaine cdn.co.com vers le domaine co.cdn1.com. Cette chaîne peut, selon un exemple, comprendre une durée de validité de la chaîne. Selon un autre exemple, la chaîne peut en outre comprendre une donnée d'authentification de la chaîne, tel qu'un certificat du serveur 41. Le message de redirection est un message de type DNS CNAME (Canonical Name) indiquant au résolveur 51 de solliciter un serveur DNS d'autorité du domaine co.cdn1.com. Le contenu du message de redirection transmis par le serveur 41 au résolveur DNS 50 est le suivant :

```
    DNS answer CNAME co.cdn1.com
    Extension: Delegation (
      from: cdn.co.com,
      to: co.cdn1.com, )
```

Le serveur 41 de noms a ainsi mis en œuvre un procédé de modification de la chaîne de délégation avec une redirection du domaine cdn.co.com vers le domaine co.cdn1.com.

A la réception du message de redirection, le résolveur DNS 50 émet, lors de l'étape E4, à destination d'un serveur DNS d'autorité 31 du domaine co.cdn1.com un message de requête d'identifiant du domaine indiqué par le serveur DNS 41 dans son message de redirection. Ce message de requête comprend la chaîne de délégation mise à jour par le serveur 41 lors de l'étape E21. Le contenu du message transmis par le serveur de résolution 50 est le suivant :

```
DNS query A co.cdn1.com
    Extension: Delegation (
      from: cdn.co.com,
      to: co.cdn1.com, )
```

Déterminant que le serveur DNS 31 dispose d'un enregistrement co.cdn2.com vers lequel le résolveur DNS 50 doit être redirigé pour obtenir un identifiant d'un serveur de données, le serveur DNS 31 modifie lors de l'étape E41 la chaîne de délégation reçue à l'étape E4 avec une redirection de co.cdn1.com vers co.cdn2.com. Le serveur DNS 31 du domaine co.cdn1.com émet un message d'instruction, correspondant à une redirection, vers le résolveur DNS 50, ce message comprenant la chaîne de délégation modifiée avec l'ajout de la redirection du domaine co.cdn1.com vers le domaine co.cdn2.com. La modification de la chaîne lors de l'étape E41, selon un exemple, comprend aussi une étape de validation de la chaîne reçue « from: cdn.co.com to: co.cdn1.com » par exemple en vérifiant l'authenticité d'un certificat ajouté par le serveur 41 du domaine cdn.co.com et une étape de signature de la chaîne modifiée en signant le bloc de données ajouté à la chaîne de délégation avec une clé privée propre au serveur 31. Le contenu du message transmis par le serveur 31 lors de l'étape E5 est le suivant :

```
DNS answer CNAME co.cdn2.com
    Extension: Delegation (
      from: cdn.co.com,
      to: co.cdn1.com,
      from: co.cdn1.com,
      to: co.cdn2.com, )
```

Le serveur DNS 31 peut ne pas valider la chaîne de délégation reçue par exemple parce que l'accord entre le domaine du serveur DNS 31 et le domaine du serveur DNS 41 de noms a expiré ou parce qu'une durée de validité de la chaîne a expiré ou est près d'expirer, ou bien encore si un domaine présent dans la chaîne n'est pas fiable. Dans ce cas le message d'instruction envoyé par le serveur DNS 31 comprend une donnée d'invalidité de la chaîne et le serveur 50 de résolution peut en informer le terminal 100 et/ou déterminer une nouvelle chaîne de délégation.

De façon identique à l'étape E4, le résolveur DNS 50 émet, lors de l'étape E6, un message de requête d'un identifiant d'un serveur de données dans le domaine co.cdn2.com vers un serveur DNS 21 du domaine co.cdn2.com. Le message de requête comprend la chaîne de délégation modifiée par le serveur 31 et le contenu du message est le suivant :

```
DNS query A co.cdn2.com
    Extension: Delegation (
      from: cdn.co.com,
      to: co.cdn1.com,
      from: co.cdn1.com,
      to: co.cdn2.com,)
```

Le serveur DNS 21 est en capacité d'indiquer un identifiant d'un serveur de données dans le domaine co.cdn2.com au résolveur DNS 50. Lors de l'étape E7, il décide donc d'envoyer un message d'instruction, en l'occurrence un message de réponse DNS comprenant l'adresse IP du serveur 22 de données ainsi que la chaîne de délégation modifiée lors de l'étape E61 avec l'ajout d'une délégation du domaine co.cdn2.com vers lui-même. Le serveur DNS 21 ajoute en effet à la chaîne reçue du résolveur DNS 50 une redirection du domaine co.cdn2.com vers lui-même, indiquant ainsi la fin de chaîne de délégation aux dispositifs exploitant cette chaîne. Le message transmis lors de l'étape E7 par le serveur DNS 21 au résolveur DNS 50 est le suivant :

```
DNS answer A IP@co.cdn2.com
    Extension: Delegation (
      from: cdn.co.com,
      to: co.cdn1.com,
      from: co.cdn1.com,
      to: co.cdn2.com,
      from: co.cdn2.com,
      to: co.cdn2.com)
```

Le résolveur DNS 50 connaît lors de la réception du message d'instruction le domaine co.cdn2.com en charge de la livraison du contenu et l'identifiant, dans ce cas l'adresse IP, du serveur 22 du domaine co.cdn2.com en charge de la livraison du contenu.

Selon une alternative, le résolveur DNS 50 émet, lors de l'étape E8, à destination du serveur DNS 41 du domaine cdn.co.com un message de contrôle comprenant la chaîne de délégation modifiée par le serveur 21. Le message émis par le résolveur DNS 50 est le suivant :

```
DNS query CNAME cdn.co.com
    Extension: Delegation (
      from: cdn.co.com,
      to: co.cdn1.com,
      from: co.cdn1.com,
      to: co.cdn2.com,
      from: co.cdn2.com,
      to: co.cdn2.com, )
```

Selon un exemple, le serveur 41 peut valider ou invalider la chaîne de délégation élaborée. Ainsi, si un domaine de la chaîne n'a pas d'accord avec le domaine cdn.co.com et/ou si un domaine n'est pas sécurisé, alors le serveur DNS 41 peut, selon une alternative, invalider la chaîne et envoyer lors de l'étape E9 un message d'invalidation de la chaîne, ce message comprenant un paramètre indiquant que la chaîne de délégation n'est pas valide. A la réception de ce message indiquant que la chaîne de délégation n'est pas valide, le résolveur DNS 50 peut émettre à destination du serveur DNS 41 de noms une nouvelle requête d'obtention de l'identifiant d'un serveur de données dans le domaine cdn.co.com avec le paramètre d'invalidité de la chaîne indiquant ainsi au serveur 41 de noms soit de transmettre une nouvelle redirection soit de transmettre au résolveur 50 de noms un identifiant d'un serveur de noms du domaine cdn.co.com sans redirection. Selon un autre exemple, si le serveur DNS 41 valide la chaîne, il transmet un message de validation au résolveur DNS 50. Ce message de validation, pour indiquer la validation de la chaîne, comprend, selon une alternative, une modification de la chaîne avec une redirection du domaine cdn.co.com vers le domaine co.cdn2.com et possiblement un paramètre de validité de la chaîne. Le message de la validation se présente alors sous la forme suivante :

```
    DNS query CNAME cdn.co.com
    Extension: Delegation (
      from: cdn.co.com,
      to: co.cdn1.com,
      from: co.cdn1.com,
      to: co.cdn2.com,
      from: co.cdn2.com,
      to: co.cdn2.com,
      from: cdn.co.com,
      to: co.cdn2.com, chaîne valide)
```

Le résolveur 50 transmet ensuite au terminal 100 un message d'information comprenant l'identifiant du serveur 22 de données. Il s'agit, selon cet exemple, d'un message DNS comprenant l'adresse IP du serveur 22 de données et comprenant en outre la chaîne de délégation élaborée et possiblement approuvée par le serveur 41. Le message reçu par le terminal 100 lors de l'étape E10 est le suivant :

```
      DNS answer A IP@co.cdn2.com
      Extension: Delegation (
       from: cdn.co.com,
       to: co.cdn1.com,
      from: co.cdn1.com,
      to: co.cdn2.com,
      from: co.cdn2.com
      to: co.cdn2.com,
      from: cdn.co.com,
      to: co.cdn2.com, )
```

Le résolveur DNS a ainsi mis en œuvre un procédé de redirection permettant d'établir la chaîne de délégation ayant permis de déterminer et de transmettre au terminal 100 l'identifiant du serveur 22 de livraison de données. La chaîne de délégation, comprend les redirections successives entre domaines. La chaîne transmise au terminal 100, selon un exemple, comprend une durée de validité de la chaîne.

Le terminal 100, une fois qu'il détient ces informations (adresse IP du serveur 22 de données, redirections et paramètres optionnels de la chaîne de délégation) peut, selon une alternative, établir une connexion avec le serveur 22 de données. Lors de l'étape E11, le terminal 100, selon un exemple, établit une connexion TLS avec le serveur 22 de données dont l'adresse IP propre au domaine co.cdn2.com, qui a été transmise lors de l'étape E10, en émettant un message TLS Client Hello. L'extension SNI (Server Name Indication) du message TLS client Hello comprend, selon un exemple, le nom de domaine cdn.co.com car il s'agit du domaine initialement sollicité par le terminal 100. Le message TLS Client Hello comprend en outre la chaîne de par le domaine cdn.co.com, le résolveur DNS 50 et le terminal 100. Le contenu du message TLS Client Hello est le suivant: TLS ClientHello

```
    Extension: Server Name Indication (cdn.co.com)
    Extension: Delegation (
      from: cdn.co.com,
      to: co.cdn1.com,
      from: co.cdn1.com,
      to: co.cdn2.com,
      from: co.cdn2.com,
      to: co.cdn2.com,
      from: cdn.co.com,
      to: co.cdn2.com)
```

Lors de l'étape E12, le serveur de données 22 transmet un message d'acceptation de la connexion au terminal 100. Par exemple, il transmet un message TLS Server Hello au terminal 100.

Lors de l'étape E13, selon un exemple, le serveur 22 de données envoie un message de communication d'au moins un certificat associé à la chaîne de délégation au terminal 100. Ce message est par exemple un message TLS ServerCertificate contenant un certificat du domaine cdn.co.com et le chemin complet du certificat correspondant aux validations successives des domaines de la chaîne de délégation. Il ajoute un certificat pour co.cdn2.com, et la chaîne de délégation prouvant la délégation. Ainsi, le terminal 100 dispose d'un certificat du domaine co.cdn2.com, une chaîne de délégation indiquant les redirections successives entre domaines et une suite de certificats assurant l'authenticité des domaines de la chaîne. Le terminal peut donc, en toute sécurité, utiliser le certificat du domaine co.cdn2.com pour les échanges suivants entre le terminal 100 et le serveur 22 de données et notamment pour les échanges relatifs aux échanges de clés de chiffrement des données.

Le message TLS serverCertificate comprend par exemple les informations suivantes:

```
    TLS ServerCertificate
    Certificate: cdn.co.com
    Certificate: co.cdn2.com
    Extension: Delegation (
      from: cdn.co.com,
      to: co.cdn1.com,
      from: co.cdn1.com,
      to: co.cdn2.com,
      from: co.cdn2.com,
      to: co.cdn2.com,
      from: cdn.co.com,
      to: co.cdn2.com, )
```

Dans les futurs échanges TLS, le terminal 100 va ainsi pouvoir utiliser le certificat du domaine délégué, co.cdn2.com pour les échanges « TLS Handshake » au lieu du certificat du domaine d'origine cdn.co.com.

L'invention a ainsi permis de déléguer la fourniture d'un identifiant d'un serveur de données à un terminal, le serveur de données étant dans un domaine distinct du domaine initialement sollicité par le terminal, par des redirections successives entre des domaines intermédiaires. Ces redirections forment une chaîne de délégation élaborée par itération successive entre un serveur de résolution et des serveurs de noms des différents domaines intervenant dans la fourniture. L'invention permet ainsi de mettre en œuvre une délégation dynamique et sécurisée entre domaines sans requérir l'échange de clés privées entre les domaines. L'invention permet en effet que les différents domaines puissent intervenir dans le procédé de redirection par le serveur 50 de résolution sans accords au préalable, chacun des domaines déterminant au fur et à mesure des redirections le domaine suivant de la chaîne et modifiant en conséquence la chaîne de délégation, jusqu'à ce qu'un domaine décide ou soit en capacité de transmettre l'identifiant du serveur de données dans son domaine au serveur 50 de résolution. Le terminal peut ainsi ensuite exploiter les informations de la chaîne et les données d'authentification des informations de la chaîne pour établir une session sécurisée vers le domaine finalement indiqué dans la chaîne.

Il est à noter que dans la figure 3, les informations présentes dans la chaîne de délégation sont uniquement les redirections entre domaines, mais la chaîne peut comprendre des données complémentaires relatives à la durée de vie de la chaîne, aux données de sécurité relatives à la chaîne, conformément aux informations des blocs de données présentées dans la figure 2.

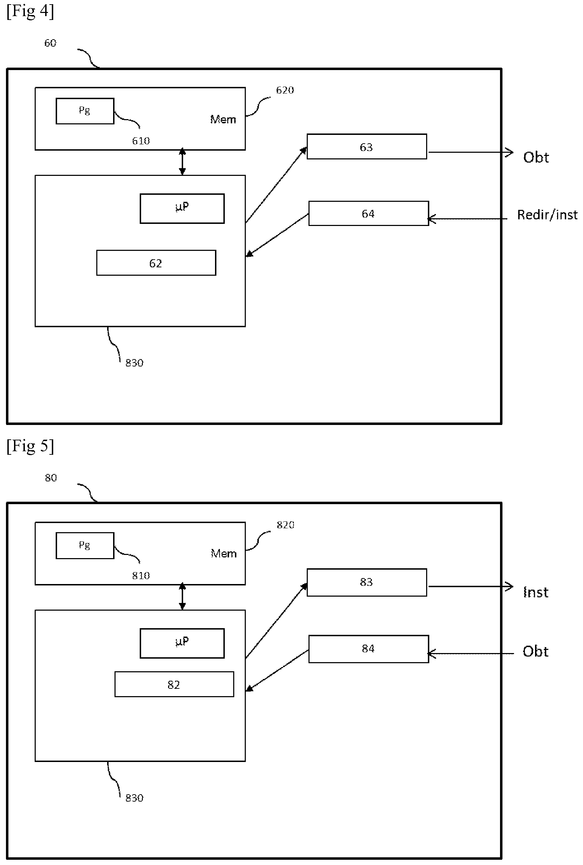

En relation avec la figure 4, on présente un exemple de structure d'un dispositif de redirection, selon un aspect de l'invention.

Le dispositif 60 de redirection met en œuvre le procédé de redirection, dont différents modes de réalisation viennent d'être décrits.

Un tel dispositif 60 de redirection peut être mis en œuvre dans un résolveur de noms, par exemple un résolveur DNS, et peut être instancié dans un terminal, fixe ou mobile ou bien dans un équipement d'accès d'un réseau domestique ou professionnel (box) ou bien dans un équipement spécifique d'un réseau d'opérateur.

Par exemple, le dispositif 60 comprend une unité de traitement 630, équipée par exemple d'un microprocesseur µP, et pilotée par un programme d'ordinateur 610, stocké dans une mémoire 620 et mettant en œuvre le procédé de redirection selon l'invention. A l'initialisation, les instructions de code du programme d'ordinateur 610 sont par exemple chargées dans une mémoire RAM, avant d'être exécutées par le processeur de l'unité de traitement 630.

Un tel dispositif 60 comprend :
- un module 62 de transfert, apte à transférer vers un deuxième serveur de noms d'un deuxième domaine un message d'obtention d'un identifiant du serveur de données dans un deuxième domaine, reçu d'un terminal,
- un récepteur 64,
- apte à recevoir en provenance du deuxième serveur de noms un message Redir de redirection vers un premier domaine, ledit message de redirection incluant une chaîne de délégation comprenant une première donnée de redirection du deuxième domaine vers le premier domaine,
- apte à recevoir en provenance d'un premier serveur de noms au moins un message Inst d'instruction comprenant la chaine de délégation modifiée avec l'ajout d'une deuxième donnée de redirection.
- un émetteur 63, apte à émettre à destination du premier serveur de noms au moins un message Obt d'obtention d'un identifiant du serveur de données dans le premier domaine, le message comprenant la chaîne de délégation reçue.

En relation avec la figure 5, on présente un exemple de structure d'un dispositif de modification, selon un aspect de l'invention.

Le dispositif 80 met en œuvre le procédé de modification, dont différents modes de réalisation viennent d'être décrits.

Un tel dispositif 80 peut être mis en œuvre dans un serveur de noms, par exemple un serveur DNS ou dans tout type de serveur associant un identifiant (adresse IP, adresse mail, identifiant privé d'un réseau) à un nom. Le dispositif 80 peut être instancié dans une architecture de communication fixe ou mobile.

Par exemple, le dispositif 80 comprend une unité de traitement 830, équipée par exemple d'un microprocesseur µP, et pilotée par un programme d'ordinateur 810, stocké dans une mémoire 820 et mettant en œuvre le procédé de modification selon l'invention. A l'initialisation, les instructions de code du programme d'ordinateur 810 sont par exemple chargées dans une mémoire RAM, avant d'être exécutées par le processeur de l'unité de traitement 830.

Un tel dispositif 80 comprend :
- un récepteur 84, apte à recevoir en provenance d'un serveur de résolution au moins un message Obt d'obtention d'un identifiant du serveur de données dans le premier domaine, le message comprenant une chaîne de délégation incluant une première donnée de redirection d'un deuxième domaine vers le premier domaine,
- un module 82 de modification, apte à modifier au moins une fois la chaîne de délégation reçue par l'ajout d'une deuxième donnée de redirection,
- un émetteur 83, apte à émettre à destination du serveur de résolution au moins un message Inst d'instruction comprenant la chaine de délégation modifiée.

## Revendications

1. Procédé de redirection, relative à l'identification d'un serveur (22) de données apte à délivrer un contenu à un terminal (100), le procédé étant mis en œuvre par un serveur (50) de résolution de type résolveur DNS d'une architecture de communication, suite au transfert (E2) vers un deuxième serveur de noms (41) d'un deuxième domaine (40) d'un message d'obtention d'un identifiant du serveur (22) de données dans le deuxième domaine (40), reçu (E1) du terminal (100), le procédé comprenant:
- une étape (E3) de réception en provenance du deuxième serveur (41) de noms d'un message de redirection vers un premier domaine (30,20), ledit message de redirection incluant un identifiant du premier domaine et comprenant en outre une chaîne de délégation comprenant une première donnée de redirection du deuxième domaine (40) vers le premier domaine (30,20),
- au moins une étape (E4, E6) d'émission à destination d'un premier serveur de noms (31,21) du premier domaine d'un message d'obtention de l'identifiant du serveur (22) de données dans le premier (30, 20) domaine, le message comprenant la chaîne de délégation reçue,
- au moins une étape (E5, E7) de réception en provenance du premier serveur de noms (31,21) d'un message d'instruction comprenant la chaine de délégation modifiée avec l'ajout d'une deuxième donnée de redirection.

2. Procédé de redirection, selon la revendication 1, comprenant en outre une étape (E8) d'émission à destination du deuxième serveur de noms (41) d'un message de contrôle comprenant la chaîne de délégation modifiée avec la deuxième donnée de redirection.

3. Procédé de redirection, selon la revendication 2, comprenant en outre une étape (E9) de réception en provenance du deuxième serveur de noms (41) d'un message de validation, incluant la chaîne de délégation modifiée et comprenant en outre un paramètre de validation de la chaîne.

4. Procédé de redirection, selon la revendication 2, comprenant en outre une étape (E9) de réception en provenance du deuxième serveur de noms (41) d'un message d'invalidation comprenant en outre un paramètre de non-validation de la chaîne.

5. Procédé de modification d'une chaîne de délégation, relative à la fourniture d'un identifiant d'un serveur (22) de données, apte à délivrer un contenu à un terminal (100), le procédé étant mis en œuvre par un premier serveur de noms (31, 21) d'un premier domaine (30,20), et comprenant:
- au moins une étape (E4, E6) de réception en provenance d'un serveur (50) de résolution de type résolveur DNS d'un message d'obtention d'un identifiant du serveur (22) de données dans le premier domaine (30, 20), le message comprenant une chaîne de délégation incluant une première donnée de redirection d'un deuxième domaine (40) vers le premier domaine (30,20),
- au moins une étape (E41, E61) de modification de la chaîne de délégation reçue par l'ajout d'une deuxième donnée de redirection,
- au moins une étape (E5, E7) d'émission à destination du serveur (50) de résolution d'un message d'instruction comprenant la chaine de délégation modifiée.

6. Procédé de modification, selon la revendication 5, où la deuxième donnée de redirection ajoutée est une redirection du premier domaine (30,20) vers le premier domaine (30,20).

7. Procédé de modification, selon la revendication 5, où la deuxième donnée de redirection est une donnée d'invalidité de la chaîne.

8. Procédé de modification, selon la revendication 5, où la deuxième donnée de redirection ajoutée est une redirection du premier domaine (20) vers un troisième domaine.

9. Procédé de modification, selon la revendication 5, où le message d'instruction comprend en outre un identifiant du serveur (22) de données dans le premier domaine (20).

10. Procédé de modification, selon la revendication 5, où la chaîne modifiée comprend en outre une donnée de signature relative au premier domaine (20).

11. Procédé de modification, selon la revendication 5, où la chaîne modifiée comprend en outre une durée de validité de la chaîne.

12. Procédé de modification, selon la revendication 5, où l'au moins une étape (E41, E61) de modification comprend en outre une étape de validation de la chaîne reçue et une étape de signature de la deuxième donnée de redirection ajoutée.

13. Dispositif (60) de redirection, relative à l'identification d'un serveur (22) de données apte à délivrer un contenu à un terminal (100), dans un serveur (50) de résolution de type résolveur DNS d'une architecture de communication, comprenant:
- un module (62) de transfert, apte à transférer vers un deuxième serveur de noms (41) d'un deuxième domaine (40) un message d'obtention d'un identifiant du serveur de données (22) dans le deuxième domaine, reçu du terminal (100),
- un récepteur (64),
- apte à recevoir en provenance du deuxième serveur de noms (41) un message de redirection vers un premier domaine (30,20), ledit message de redirection incluant un identifiant du premier domaine et comprenant en outre une chaîne de délégation comprenant une première donnée de redirection du deuxième domaine (40) vers le premier domaine (30,20),
- apte à recevoir en provenance d'un premier serveur de noms (31,21) au moins un message d'instruction comprenant la chaine de délégation modifiée avec l'ajout d'une deuxième donnée de redirection,
- un émetteur (63), apte à émettre à destination du premier serveur de noms (31,21) au moins un message d'obtention d'un identifiant du serveur de données (22) dans le premier domaine (30,20), le message comprenant la chaîne de délégation reçue.

14. Dispositif (80) de modification d'une chaîne de délégation relative à la fourniture d'un identifiant d'un serveur de données (22), apte à délivrer un contenu à un terminal (100), mis en œuvre dans un premier serveur de serveurs de noms (31, 21) d'un premier domaine (30,20), et comprenant:
- un récepteur (84), apte à recevoir en provenance d'un serveur (50) de résolution de type résolveur DNS au moins un message d'obtention d'un identifiant du serveur de données (22) dans le premier domaine (20, 30), le message comprenant une chaîne de délégation incluant une première donnée de redirection d'un deuxième domaine (40) vers le premier domaine (30,20),
- un module (82) de modification, apte à modifier au moins une fois la chaîne de délégation reçue par l'ajout d'une deuxième donnée de redirection,
- un émetteur (83), apte à émettre à destination du serveur (50) de résolution au moins un message d'instruction comprenant la chaine de délégation modifiée.

15. Système de redirection relative à l'identification d'un serveur de données apte à délivrer un contenu à un terminal, comprenant:
- un dispositif (60) de redirection selon la revendication 13,
- un dispositif (80) de modification selon la revendication 14.

16. Programme produit d'ordinateur **caractérisé en ce qu'**il comprend des instructions pour la mise en œuvre des étapes du procédé de redirection selon la revendication 1, lorsque ce procédé est exécuté par un processeur.

17. Support d'enregistrement lisible par un dispositif de redirection conforme à la revendication 13, sur lequel est enregistré le programme selon la revendication 16.

## Patentansprüche

1. Verfahren zur Umleitung bezüglich der Identifizierung eines Datenservers (22), der zum Liefern eines Inhalts an ein Endgerät (100) geeignet ist, wobei das Verfahren von einem Auflösungsserver (50) vom Typ DNS-Resolver einer Kommunikationsarchitektur eingesetzt wird, nach der Weiterleitung (E2), zu einem zweiten Nameserver (41) einer zweiten Domain (40), einer Nachricht zum Erhalten einer Kennung des Datenservers (22) in der zweiten Domain (40), die von dem Endgerät (100) empfangen wird (E1), wobei das Verfahren umfasst:
- einen Schritt (E3) des Empfangens, von dem zweiten Nameserver (41), einer Nachricht zur Umleitung zu einer ersten Domain (30,20), wobei die Umleitungsnachricht eine Kennung der ersten Domain beinhaltet und ferner eine Delegierungskette umfasst, die ein erstes Umleitungsdatenelement zur Umleitung der zweiten Domain (40) zu der ersten Domain (30,20) umfasst,
- mindestens einen Schritt (E4, E6) des Sendens, an einen ersten Nameserver (31,21) der ersten Domain, einer Nachricht zum Erhalten der Kennung des Datenservers (22) in der ersten (30, 20) Domain, wobei die Nachricht die empfangene Delegierungskette umfasst,
- mindestens einen Schritt (E5, E7) des Empfangens, von dem ersten Nameserver (31,21), einer Anweisungsnachricht, welche die Delegierungskette umfasst, die durch das Hinzufügen eines zweiten Umleitungsdatenelements geändert wurde.

2. Verfahren zur Umleitung nach Anspruch 1, umfassend ferner einen Schritt (E8) des Sendens, an den zweiten Nameserver (41), einer Steuernachricht, welche die geänderte Delegierungskette mit dem zweiten Umleitungsdatenelement umfasst.

3. Verfahren zur Umleitung nach Anspruch 2, umfassend ferner einen Schritt (E9) des Empfangens, von dem zweiten Nameserver (41), einer Validierungsnachricht, welche die geänderte Delegierungskette beinhaltet und ferner einen Parameter zur Validierung der Kette umfasst.

4. Verfahren zur Umleitung nach Anspruch 2, umfassend ferner einen Schritt (E9) des Empfangens, von dem zweiten Nameserver (41), einer Invalidierungsnachricht, die ferner einen Parameter zur Nichtvalidierung der Kette umfasst.

5. Verfahren zur Änderung einer Delegierungskette bezüglich der Bereitstellung einer Kennung eines Datenservers (22), der zum Liefern eines Inhalts an ein Endgerät (100) geeignet ist, wobei das Verfahren von einem ersten Nameserver (31, 21) einer ersten Domain (30,20) eingesetzt wird und umfasst:
- mindestens einen Schritt (E4, E6) des Empfangens, von einem Auflösungsserver (50) vom Typ DNS-Resolver, einer Nachricht zum Erhalten einer Kennung des Datenservers (22) in der ersten Domain (30, 20), wobei die Nachricht eine Delegierungskette umfasst, die ein erstes Umleitungsdatenelement zur Umleitung einer zweiten Domain (40) zu der ersten Domain (30,20) beinhaltet;
- mindestens einen Schritt (E41, E61) des Änderns der empfangenen Delegierungskette durch das Hinzufügen eines zweiten Umleitungsdatenelements,
- mindestens einen Schritt (E5, E7) des Sendens, an den Auflösungsserver (50), einer Anweisungsnachricht, welche die geänderte Delegierungskette umfasst.

6. Verfahren zur Änderung nach Anspruch 5, wobei das zweite hinzugefügte Umleitungsdatenelement eine Umleitung der ersten Domain (30,20) zu der ersten Domain (30,20) ist.

7. Verfahren zur Änderung nach Anspruch 5, wobei das zweite Umleitungsdatenelement ein Ungültigkeitsdatenelement der Kette ist.

8. Verfahren zur Änderung nach Anspruch 5, wobei das zweite hinzugefügte Umleitungsdatenelement eine Umleitung der ersten Domain (20) zu einer dritten Domain ist.

9. Verfahren zur Änderung nach Anspruch 5, wobei die Anweisungsnachricht ferner eine Kennung des Datenservers (22) in der ersten Domain (20) umfasst.

10. Verfahren zur Änderung nach Anspruch 5, wobei die geänderte Kette ferner ein Signaturdatenelement bezüglich der ersten Domain (20) umfasst.

11. Verfahren zur Änderung nach Anspruch 5, wobei die geänderte Kette ferner eine Gültigkeitsdauer der Kette umfasst.

12. Verfahren zur Änderung nach Anspruch 5, wobei der mindestens eine Schritt (E41, E61) des Änderns ferner einen Schritt des Validierens der empfangenen Kette und einen Schritt des Signierens des zweiten hinzugefügten Umleitungsdatenelements umfasst.

13. Vorrichtung (60) zur Umleitung bezüglich der Identifizierung eines Datenservers (22), der zum Liefern eines Inhalts an ein Endgerät (100) geeignet ist, in einem Auflösungsserver (50) vom Typ DNS-Resolver einer Kommunikationsarchitektur, umfassend:
- ein Weiterleitungsmodul (62), das geeignet ist, zu einem zweiten Nameserver (41) einer zweiten Domain (40) eine Nachricht zum Erhalten einer Kennung des Datenservers (22) in der zweiten Domain weiterzuleiten, die von dem Endgerät (100) empfangen wird;
- einen Empfänger (64),
- der geeignet ist, von dem zweiten Nameserver (41) eine Umleitungsnachricht zur Umleitung zu einer ersten Domain (30,20) zu empfangen, wobei die Umleitungsnachricht eine Kennung der ersten Domain beinhaltet und ferner eine Delegierungskette umfasst, die ein erstes Umleitungsdatenelement zur Umleitung der zweiten Domain (40) zu der ersten Domain (30,20) umfasst,
- der geeignet ist, von einem ersten Nameserver (31,21) mindestens eine Anweisungsnachricht zu empfangen, welche die Delegierungskette umfasst, die durch das Hinzufügen eines zweiten Umleitungsdatenelements geändert wurde;
- einen Sender (63), der geeignet ist, an den ersten Nameserver (31,21) mindestens eine Nachricht zum Erhalten einer Kennung des Datenservers (22) in der ersten Domain (30,20) zu senden, wobei die Nachricht die empfangene Delegierungskette umfasst.

14. Vorrichtung (80) zur Änderung einer Delegierungskette bezüglich der Bereitstellung einer Kennung eines Datenservers (22), der zum Liefern eines Inhalts an ein Endgerät (100) geeignet ist, die in einem ersten Server von Nameservern (31, 21) einer ersten Domain (30,20) eingesetzt wird und umfasst:
- einen Empfänger (84), der geeignet ist, von einem Auflösungsserver (50) vom Typ DNS-Resolver mindestens eine Nachricht zum Erhalten einer Kennung des Datenservers (22) in der ersten Domain (20, 30) zu empfangen, wobei die Nachricht eine Delegierungskette umfasst, die ein erstes Umleitungsdatenelement zur Umleitung einer zweiten Domain (40) zu der ersten Domain (30,20) beinhaltet,
- ein Änderungsmodul (82), das geeignet ist, die empfangene Delegierungskette mindestens einmal durch das Hinzufügen eines zweiten Umleitungsdatenelements zu ändern,
- einen Sender (83), der geeignet ist, an den Auflösungsserver (50) mindestens eine Anweisungsnachricht zu senden, welche die geänderte Delegierungskette umfasst.

15. System zur Umleitung bezüglich der Identifizierung eines Datenservers, der zum Liefern eines Inhalts an ein Endgerät geeignet ist, umfassend:
- eine Vorrichtung (60) zur Umleitung nach Anspruch 13,
- eine Vorrichtung (80) zur Änderung nach Anspruch 14.

16. Computerprogrammprodukt, **dadurch gekennzeichnet, dass** es Anweisungen umfasst, die bei der Ausführung dieses Verfahrens durch einen Prozessor die Schritte des Verfahrens zur Umleitung nach Anspruch 1 durchführen.

17. Speichermedium, das von einer Vorrichtung zur Umleitung nach Anspruch 13 gelesen werden kann und auf dem das Programm nach Anspruch 16 gespeichert ist.

## Claims

1. Redirection method, relating to the identification of a data server (22) capable of delivering a content to a terminal (100), the method being implemented by a resolution server (50) of DNS resolver type of a communication architecture, following the transfer (E2), to a second name server (41) of a second domain (40), of a message for obtaining an identifier of the data server (22) in the second domain (40), received (E1) from the terminal (100), the method comprising:
- a step (E3) of reception, from the second name server (41), of a message for redirection to a first domain (30, 20), said redirection message including an identifier of the first domain and further comprising a delegation chain comprising a first datum for redirection from the second domain (40) to the first domain (30, 20),
- at least one step (E4, E6) of transmission, to a first name server (31, 21) of the first domain, of a message for obtaining the identifier of the data server (22) in the first domain (30, 20), the message comprising the received delegation chain,
- at least one step (E5, E7) of reception, from the first name server (31, 21), of an instruction message comprising the delegation chain modified with the addition of a second redirection datum.

2. Redirection method according to Claim 1, further comprising a step (E8) of transmission, to the second name server (41), of a control message comprising the delegation chain modified with the second redirection datum.

3. Redirection method according to Claim 2, further comprising a step (E9) of reception, from the second name server (41), of a validation message, including the modified delegation chain and further comprising a chain validation parameter.

4. Redirection method according to Claim 2, further comprising a step (E9) of reception, from the second name server (41), of an invalidation message further comprising a chain non-validation parameter.

5. Method for modifying a delegation chain, relating to the provision of an identifier of a data server (22), capable of delivering a content to a terminal (100), the method being implemented by a first name server (31, 21) of a first domain (30, 20), and comprising:
- at least one step (E4, E6) of reception, from a resolution server (50) of DNS resolver type, of a message for obtaining an identifier of the data server (22) in the first domain (30, 20), the message comprising a delegation chain including a first datum for redirection from a second domain (40) to the first domain (30, 20),
- at least one step (E41, E61) of modification of the received delegation chain by the addition of a second redirection datum,
- at least one step (E5, E7) of transmission, to the resolution server (50), of an instruction message comprising the modified delegation chain.

6. Modification method according to Claim 5, in which the added second redirection datum is a redirection from the first domain (30, 20) to the first domain (30, 20).

7. Modification method according to Claim 5, in which the second redirection datum is a chain invalidity datum.

8. Modification method according to Claim 5, in which the added second redirection datum is a redirection from the first domain (20) to a third domain.

9. Modification method according to Claim 5, in which the instruction message further comprises an identifier of the data server (22) in the first domain (20).

10. Modification method according to Claim 5, in which the modified chain further comprises a signature datum relating to the first domain (20).

11. Modification method according to Claim 5, in which the modified chain further comprises a chain validity time.

12. Modification method according to Claim 5, in which the at least one modification step (E41, E61) further comprises a step of validation of the received chain and a step of signing of the added second redirection datum.

13. Redirection device (60), relating to the identification of a data server (22) capable of delivering a content to a terminal (100), in a resolution server (50) of DNS resolver type of a communication architecture, comprising:
- a transfer module (62), capable of transferring, to a second name server (41) of a second domain (40), a message for obtaining an identifier of the data server (22) in the second domain, received from the terminal (100),
- a receiver (64),
- capable of receiving, from the second name server (41), a message for redirection to a first domain (30, 20), said redirection message including an identifier of the first domain and further comprising a delegation chain comprising a first datum for redirection from the second domain (40) to the first domain (30, 20),
- capable of receiving, from a first name server (31, 21), at least one instruction message comprising the delegation chain modified with the addition of a second redirection datum,
- a transmitter (63), capable of transmitting, to the first name server (31, 21), at least one message for obtaining an identifier of the data server (22) in the first domain (30, 20), the message comprising the received delegation chain.

14. Device (80) for modifying a delegation chain relating to the provision of an identifier of a data server (22), capable of delivering a content to a terminal (100), implemented in a first server of name servers (31, 21) of a first domain (30, 20), and comprising:
- a receiver (84), capable of receiving, from a resolution server (50) of DNS resolver type, at least one message for obtaining an identifier of the data server (22) in the first domain (20, 30), the message comprising a delegation chain including a first datum for redirection from a second domain (40) to the first domain (30, 20),
- a modification module (82), capable of at least once modifying the received delegation chain by the addition of a second redirection datum,
- a transmitter (83), capable of transmitting, to the resolution server (50), at least one instruction message comprising the modified delegation chain.

15. Redirection system relating to the identification of a data server capable of delivering a content to a terminal, comprising:
- a redirection device (60) according to Claim 13,
- a modification device (80) according to Claim **14.**

16. Computer program product, **characterized in that** it comprises instructions for the implementation of the steps of the redirection method according to Claim 1, when this method is executed by a processor.

17. Storage medium that can be read by a redirection device according to Claim 13, on which the program according to Claim 16 is stored.
